# EUROPÄISCHE PATENTSCHRIFT

(11) **EP 2 826 534 B1**
(45) Veröffentlichungstag und Bekanntmachung des Hinweises auf die Patenterteilung: **14.10.2015**
(21) Anmeldenummer: 14002185.8
(22) Anmeldetag: 26.06.2014
(51) Int. Cl.: B01D 35/06, B01D 35/147, B01D 29/21, B01D 29/96, B01D 35/027

(54) **Filtervorrichtung**
Filter device
Dispositif de filtre

(30) Priorität: 16.07.2013 DE 102013011865
(43) Veröffentlichungstag der Anmeldung: 21.01.2015
(73) Patentinhaber: RT-Filtertechnik Gmbh, 88048 Friedrichshafen (DE)
(72) Erfinder: Stehle, Gerhard, 78467 Konstanz (DE); Bautz, Marco, 88048 Friedrichshafen (DE)
(74) Vertreter: Bartels & Partner

(56) Entgegenhaltungen:
- DE-A1- 4 432 095
- DE-A1- 19 613 847
- DE-A1-102010 049 974

## Beschreibung

Die Erfindung betrifft eine Filtervorrichtung, mit mindestens einem in einem Gehäuse austauschbar aufnehmbaren Filterelement, das ein vom zu reinigenden Fluid durchströmbares Filtermedium und an zumindest einem Ende eine Endkappe aufweist, die zur Positionierung des Filterelements in einer Funktionsstellung mit einem Festlegeelement zusammenwirkt, das mit einem abnehmbaren Deckel des Gehäuses verbunden und für den Austausch eines Filterelements aus dem Gehäuse herausbewegbar ist. Ferner bezieht sich die Erfindung auf ein Filterelement zur Benutzung bei einer derartigen Filtervorrichtung.

Filtervorrichtungen dieser Art sind Stand der Technik. Sie finden verbreitete Anwendung für die Reinigung von Fluiden, wie Schmier- oder Kraftstoffen, und insbesondere für Hydrauliköl in hydraulischen Arbeitskreisen. Wenn derartige Hydrauliksysteme für mobile Maschinen zum Einsatz kommen, etwa bei Baggern, Rad- oder Teleskopladern etc., die umfänglich in einer Arbeitshydraulik vorgesehen sind, beispielsweise in Form von mittels Pumpen ansteuerbarer und versorgbarer Hydraulikzylinder, dann sind die betreffenden Filtervorrichtungen, vorzugsweise als sogenannte In-Tank-Filter, in einen zugehörigen, behälterartigen Vorratstank eingebaut.

Das Dokument WO 2009/109212 A offenbart eine Filtervorrichtung der eingangs genannten Gattung in Form eines Tank-Einbaufilters. Im Betrieb strömt das zu reinigende Fluid durch einen am Boden der Filtervorrichtung vorgesehenen Einlass in den vom Filtermedium umgebenen, inneren Filterhohlraum des Filterelementes ein, durchströmt das Filtermedium von innen nach außen und gelangt durch fensterartige Wanddurchbrüche des das Filterelement umgebenden Gehäuses in den Tank. Zur Festlegung des Filterelementes in seiner Funktionsstellung liegt ein mit dem Deckel des Gehäuses verbundenes Festlegeelement an der oberen Endkappe des Filterelementes an, wobei zwischen Endkappe und Festlegeelement eine Dichtungsanordnung vorgesehen ist. Entsprechend der Einbausituation im Tank können sich im Betrieb Fluidpegel ergeben, die das obere Ende des Filterelementes mit dem Festlegeelement übersteigen. Um für einen Austausch des Filterelementes zu vermeiden, dass dieses im eingetauchten Zustand, sozusagen "nass", gehandhabt werden muss, ist bei der bekannten Vorrichtung über die Dichtungsanordnung zwischen Festlegeelement und Endkappe des Filterelementes eine ausreichend feste Verbindung realisiert, so dass das Filterelement durch die Bewegung des Festlegeelementes bei Abnahme des Gehäusedeckels aus dem Gehäuse herausbewegbar ist. Um die Gefahr auszuschließen, dass es bei einem Austauschvorgang bei Abnahme des Deckels und dem Abheben des Festlegeelementes zu einem Ablösen vom Filterelement kommt, was zur Folge hätte, dass das benutzte Filterelement sozusagen im "nassen" gehandhabt werden müsste, muss die Verbindung zwischen Endkappe und Festlegeelement konstruktiv sorgfältig mit Einhaltung entsprechender Toleranzen, ausgebildet sein.

Die DE 196 13 847 A1 und die DE 44 32 095 A1 zeigen jeweils ein Filterelement zur Benutzung bei einer Filtervorrichtung auf, mit mindestens einer Endkappe, die zur Positionierung in einer Funktionsstellung mit einem Festlegeelement eines zugeordneten Gehäuses zusammenwirkt.

Ausgehend von diesem Stand der Technik stellt sich die Erfindung die Aufgabe, eine Filtervorrichtung zur Verfügung zu stellen, die einfach herstellbar ist, den Austausch von Filterelementen jedoch auf besonders einfache und sichere Weise ermöglicht.

Erfindungsgemäß ist diese Aufgabe durch eine Filtervorrichtung gelöst, die die Merkmale des Patentanspruches 1 in seiner Gesamtheit aufweist.

Eine wesentliche Besonderheit der Erfindung besteht demgemäß darin, dass das Festlegeelement von der zugeordneten Endkappe des Filterelements bei der Abnahme des Deckels des Gehäuses von der Endkappe des Filterelements trennbar ist, dass jedoch zwischen Festlegeelement und Endkappe eine Mitnehmereinrichtung vorgesehen ist, die beim Trennvorgang in Abhängigkeit vom Erreichen einer vorgegebenen Weglänge der Relativbewegung zwischen Festlegeelement und Endkappe für die Mitnahme der Endkappe und damit des Filterelementes aktivierbar ist. Durch das Vorhandensein einer Mitnehmereinrichtung entfällt die Notwendigkeit, die an Festlegeelement und Endkappe miteinander zusammenwirkenden Bauelemente konstruktiv derart auszubilden, dass das Festlegeelement selbst eine sichere Mitnahme des Filterelementes beim Austauschvorgang gewährleistet. Diese Elemente brauchen daher lediglich zur Lagefestlegung des Filterelementes in der Funktionsstellung und dabei erfolgender gegenseitiger Abdichtung ausgelegt zu werden. Dank des Vorhandenseins der Mitnehmereinrichtung ist trotzdem sichergestellt, dass nach erfolgter Trennung und nachdem das Festlegeelement durch Abheben des Deckels eine bestimmte Strecke aus dem Gehäuse heraus bewegt und damit für die weitere Handhabung gut zugänglich ist, das Filterelement sicher für den Austausch mitgenommen wird.

Bei vorteilhaften Ausführungsbeispielen weist die Mitnehmereinrichtung mindestens ein am Festlegeelement verankertes Zugglied auf, an dem sich in einem der vorgegebenen Weglänge der Relativbewegung entsprechenden Abstand vom Festlegeelement ein Mitnehmer befindet, der bei Erreichen dieser Weglänge an einem zugeordneten Anschlag an der Endkappe für die Mitnahme des Filterelements anläuft.

In vorteilhafter Weise kann das jeweilige Zugglied in Form einer Leiste ausgebildet sein, die im Bereich ihres freien Endes einen Vorsprung als Mitnehmer aufweist und in einer am Umfang der Endkappe angebrachten Lasche verschiebbar ist, die einen mit dem Vorsprung zusammenwirkenden, die Verschiebebewegung begrenzenden Anschlag aufweist. Vorzugsweise ist die Anordnung hierbei so getroffen, dass mehrere Leisten vorhanden sind, denen am Umfang der Endkappe verteilte Laschen zugeordnet sind.

Bei vorteilhaften Ausführungsbeispielen kann die Anordnung so getroffen sein, dass das Festlegeelement als integralen Bestandteil ein Bypassventil zur Bildung eines das Filtermedium umgehenden Fluidweges aufweist.

Bei Ausführungsbeispielen mit einem mit einem Bypassventil versehenen Festlegeelement ist die Anordnung mit besonderem Vorteil so getroffen, dass das Festlegeelement in einem axialen Abstand vom Deckel mit diesem über einen zum kreiszylinderförmigen Gehäuse koaxial verlaufenden Träger verbunden ist und eine mit ihrem Außenumfang an der Innenwand des Gehäuses anliegende Scheibe aufweist, die sich in einer zur Achse des Trägers senkrechten Radialebene erstreckt und das Gehäuse in eine zwischen Festlegeelement und Deckel befindliche, obere Bypasskammer und eine darunter befindliche Elementkammer unterteilt. Durch die Anlage des Außenumfanges der Scheibe an der Gehäusewand bildet die Scheibe zum einen eine Trennwand zwischen dem Ausströmbereich des Bypassventils, zum anderen übernimmt die Scheibe die Abstützung des Festlegeelementes und damit des Filterelementes gegenüber im Betrieb wirkenden Querkräften.

Bei besonders vorteilhaften Ausführungsbeispielen bildet das Festlegeelement an der Unterseite der Scheibe einen axial vorspringenden Stutzen, der sich bei der Funktionsstellung in eine zentrale Öffnung der Endkappe des Filterelementes erstreckt und außenseitig an der Öffnung durch eine Dichteinrichtung abgedichtet ist, die innerhalb des Filtergehäuses die Abdichtung der Rohseite gegenüber der Reinseite bildet.

Mit besonderem Vorteil kann die Anordnung so getroffen sein, dass radial außerhalb des Stutzens ein von der Unterseite der Scheibe glockenförmig vorspringender Abstützkörper vorgesehen ist, der bei der Funktionsstellung an der Oberseite der Endkappe zur Bildung einer axialen Sicherung derselben anliegt.

Bei vorteilhaften Ausführungsbeispielen ist an der Oberseite der Scheibe ein Vorsprung in der Art eines Doms angeformt, dessen oberes Ende an dem das Festlegeelement mit dem Deckel verbindenden Träger angreift, wobei an der Außenseite des Doms das Bypassventil mit einem Ventilkörper angeordnet ist, der unter Einwirkung einer Schließkraft einen Durchlass verschließt, der in der Scheibe innerhalb des Bereichs des Stutzens ausgebildet ist. Bei der durch die Scheibe des Festlegeelementes gebildeten Abtrennung der Bypasskammer von der Elementkammer kann die Wand des Gehäuses im Bereich der Bypasskammer in besonders vorteilhafter Weise als Bypasssieb vorgesehen und mit einer Lochung versehen sein, während die Gehäusewand im Bereich der Elementkammer fensterartige Durchgänge aufweisen kann.

Gegenstand der Erfindung ist auch ein zur Benutzung bei einer Filtervorrichtung nach einem der Ansprüche 1 bis 9 vorgesehenes Filterelement, das die Merkmale des Patentanspruches 10 aufweist.

Nachstehend ist die Erfindung anhand von in der Zeichnung dargestellten Ausführungsbeispielen im Einzelnen erläutert. Es zeigen:
- Fig. 1: in perspektivischer Schrägansicht und teils in Längsrichtung aufgeschnitten eine Filtervorrichtung gemäß einem ersten Ausführungsbeispiel der Erfindung;
- Fig. 2: in perspektivischer Schrägansicht und in Längsrichtung aufgeschnitten lediglich den oberen Bereich eines zweiten Ausführungsbeispiels;
- Fig. 3: eine gegenüber Fig. 2 vergrößerte Darstellung lediglich des der oberen Endkappe des Filterelementes des zweiten Ausführungsbeispiels benachbarten Vorrichtungsteiles; und
- Fig. 4: eine der Fig. 2 ähnliche Darstellung des zweiten Ausführungsbeispiels mit vom Filtergehäuse abgehobenem Gehäusedeckel.

Nachstehend ist die Erfindung anhand von Ausführungsbeispielen erläutert, bei denen die Filtervorrichtung als Einbaufilter (sogenannter In-Tank-Filter) ausgebildet ist. In der Zeichnung ist vom zugeordneten Tank, insbesondere in Form eines Tanks zur Bevorratung von Hydrauliköl, jeweils lediglich ein Tankflansch 3 des im Übrigen nicht dargestellten Tanks angedeutet. Der Tankflansch 3 umgibt eine Tanköffnung, in die sich das obere offene Ende eines Filtergehäuses 7 erstreckt. Die Öffnung 5 ist durch einen abnehmbaren Gehäusedeckel 9 verschließbar, der über Schrauben 11 am Flanschteil festlegbar ist. Das holzylinderförmige Gehäuse 7 ist am unteren Ende mit einer unteren Tankkammer 13 verbunden, die einen Einlaufkanal 15 für das verschmutzte Fluid bildet. In einem Abstand vom unteren Ende weist die Wand des Gehäuses 7 fensterartige Durchlassöffnungen 17 (in den Figuren nur teilweise beziffert) für den Austritt des abgereinigten Fluids auf. Die Durchlassöffnungen 17 erstrecken sich nach oben bis zum Bereich des oberen Endes eines im Gehäuse 7 aufnehmbaren Filterelementes, das sich aus einem unteren Grobfilterelement 19 und einem oberen Feinfilterelement 21 zusammensetzt. Die Bauweise des zusammengesetzten Filterelementes 19, 21 und die örtliche Zuordnung der Durchlassöffnungen 17 entspricht insoweit dem bekannten Einbaufilter der aus dem zum Stand der Technik erwähnten Dokument WO 2009/109212 A1 an sich bekannt ist. Wie dort offenbart, sind Grobfilterelement 19 und Feinfilterelement 21 über ein Verbindungsteil 23 miteinander verbunden, das durch einen einen Fluiddurchgang bildenden Ringkörper gebildet ist.

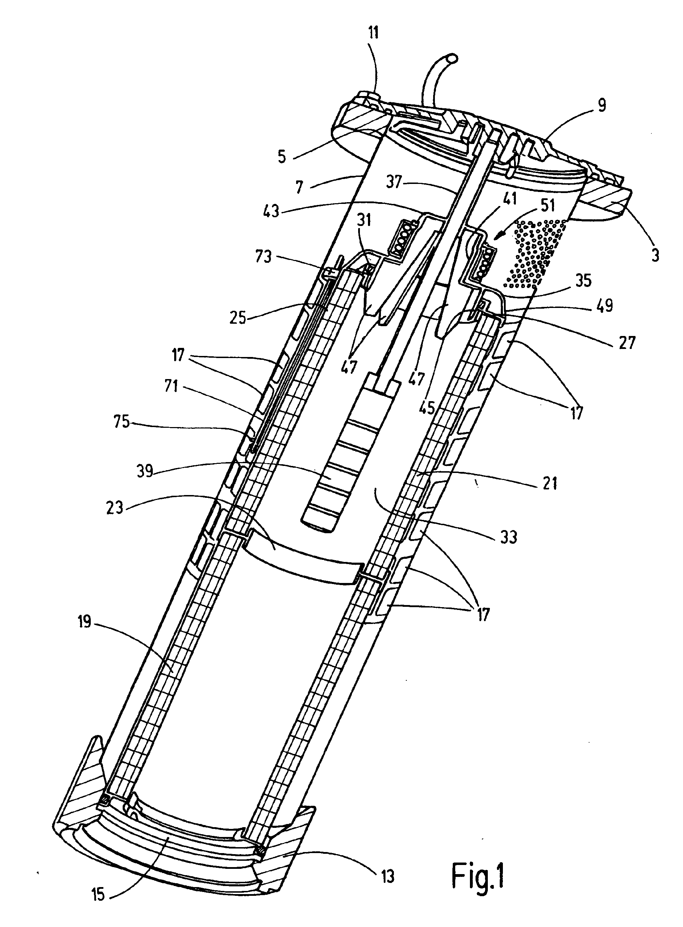

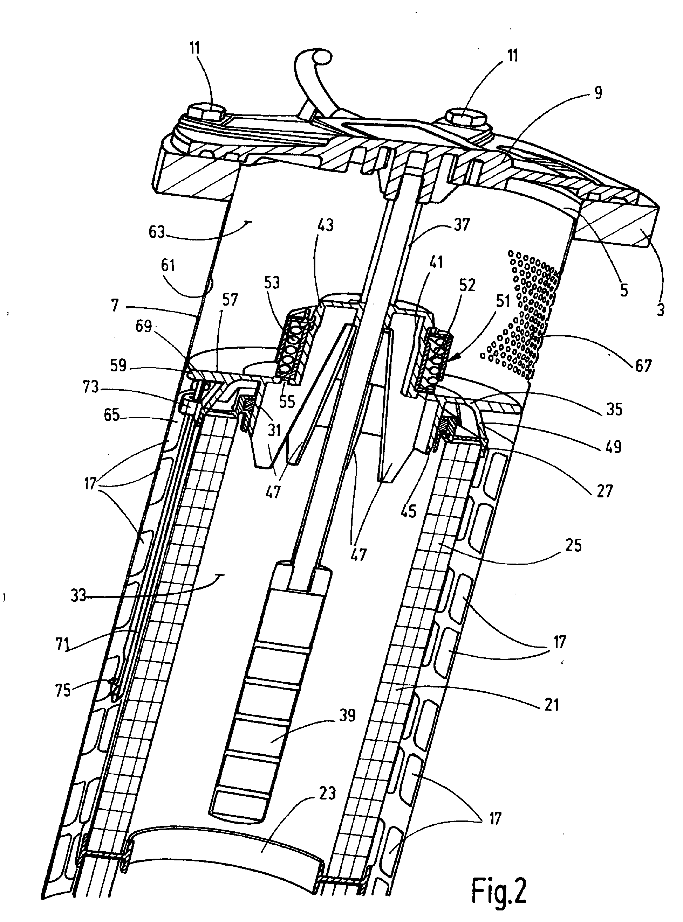

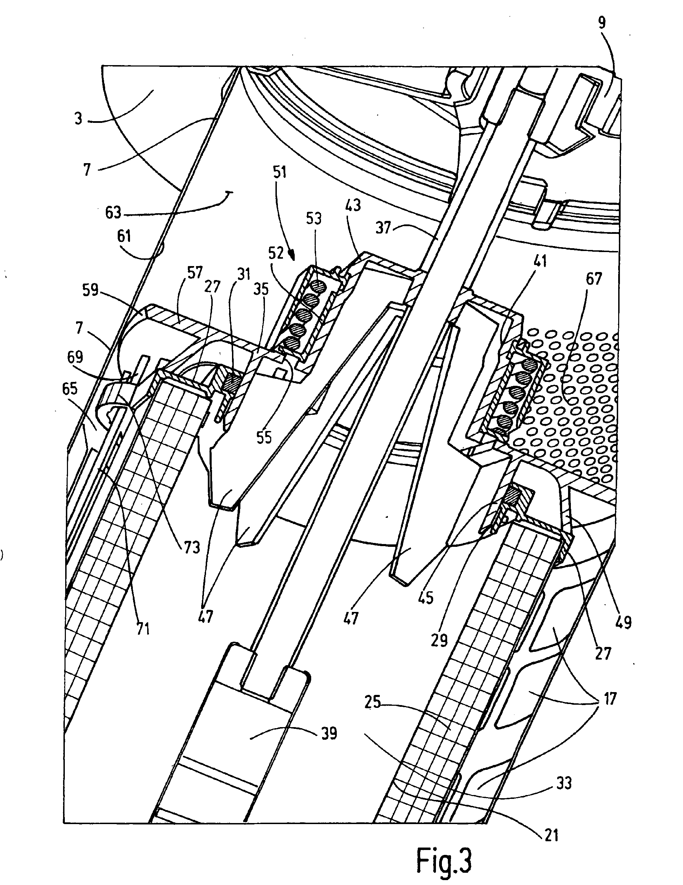

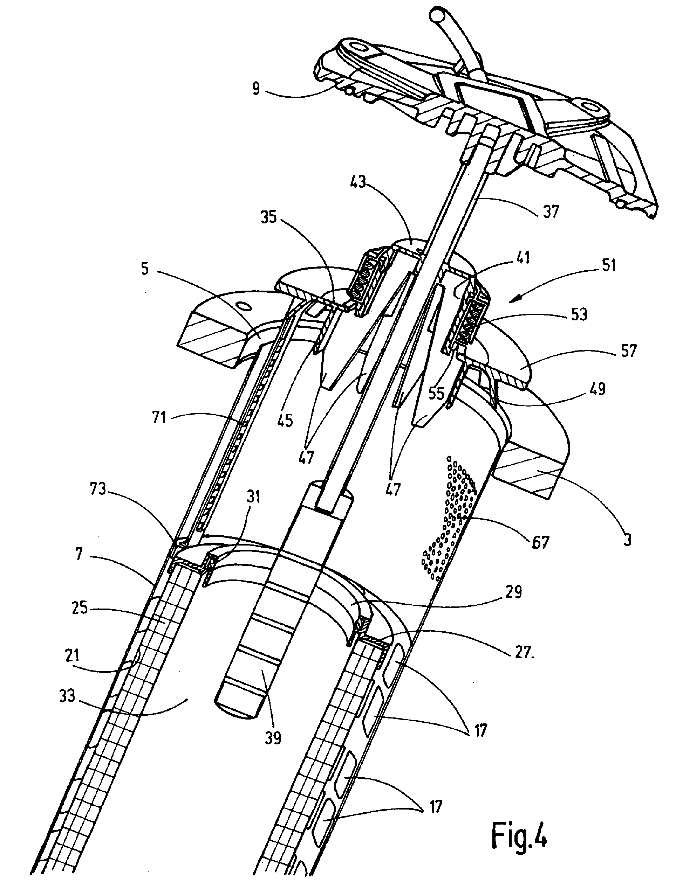

Das Filterelement 19, 21 weist am oberen Ende seines Filtermediums 25 eine Endkappe 27 auf die, wie es am deutlichsten aus der das zweite Ausführungsbeispiel betreffenden Fig. 4 ersichtlich ist, eine zentrale Öffnung 29 aufweist, an der sich eine Dichteinrichtung in Form eines O-Ringes 31 befindet. Die Öffnung 29 bildet einen Durchgang zum inneren Filterhohlraum 33 des Filterelementes 21. Die Fig. 1 zeigt das Filterelement 19, 21 in seiner Funktionsstellung, wie sie auch bezüglich des zweiten Ausführungsbeispiels in Fig. 2 und 3 gezeigt ist. In der Funktionsstellung ist das Filterelement 19, 21 mittels eines Festlegeelementes 35 gesichert, das seinerseits mit dem Gehäusedeckel 9 fest verbunden ist. Wie es auch aus dem zum Stand der Technik genannten Dokument WO 2009/109212 A1 an sich bekannt ist, erfolgt diese Verbindung über einen sich koaxial zur Zylinderachse des Gehäuses 7 verlaufenden, stabartigen Träger 37. Dieser erstreckt sich durch das Festlegeelement 35 hindurch in den Filterhohlraum 33 und weist an seinem freien Ende eine sogenannte Magnetkerze 39 auf, also eine Permanentmagneteinrichtung von ebenfalls an sich bekannter Art.

Das Festlegeelement 35 in Form eines vorzugsweise aus Kunststoff gebildeten Formteiles bildet im Zentralbereich einen Hohlkörper 41, der an der Oberseite des Festlegeelementes 35 in der Art eines Domes 43 axial vorspringt. An der Unterseite bildet der Hohlkörper 41 einen Stutzen 45, der sich durch die Öffnung 29 der Endkappe 27 in den Filterhohlraum 33 erstreckt und an der Öffnung 29 durch den O-Ring 31 abgedichtet ist. Der Innenraum des Hohlkörpers 41 einschließlich des Stutzens 45 ist durch fächerartige Rippen 47 verstärkt. Radial außerhalb des Stutzens 45 bildet das Festlegeelement 35 einen glockenförmigen, axial vorspringenden Abstützkörper 49, der bei der Funktionsstellung an der Oberseite der Endkappe 27 zur Bildung einer axialen Sicherung derselben anliegt. An der Außenseite des Doms 43 des Festlegeelementes 35 befindet sich ein in Fig. 1 als Ganzes mit 51 bezeichnetes Bypassventil, das bei einem entsprechend hohen Staudruck einen das Filtermedium 25 umgehenden Fluidweg bildet. Wie aus den das zweite Ausführungsbeispiel betreffenden Fig. 2 und 3 deutlicher ersichtlich ist, weist das Bypassventil 51 einen hülsenartigen, bewegbaren Ventilkörper 52 auf, der durch eine Feder 53 in eine Schließstellung vorgespannt ist, in der er einen Fluiddurchgang 55 im Festlegeelement 35 verschließt, siehe insbesondere Fig. 2 und 3.

Das zweite Ausführungsbeispiel von Fig. 2 bis 4 unterscheidet sich vom Beispiel von Fig. 1 dadurch, dass das Festlegeelement 35 über den Bereich des Abstützkörpers 49 hinaus radial erweitert ist, so dass die Oberseite außerhalb des Zentralbereiches eine ebene Scheibe 57 bildet. Deren Umfangsrand erstreckt sich mit ihrem Außenumfang 59 bis zur Innenwand 61 des Gehäuses 7. Für das Festlegeelement 35 bildet daher die Scheibe 57 eine Abstützung gegen im Betrieb am Filterelement 19, 21 wirkende Querkräfte. Gleichzeitig bildet die Scheibe 57 eine Art Trennwand, die im Gehäuse 7 eine obere Bypasskammer 63, die sich zwischen Scheibe 57 und Gehäusedeckel 9 befindet, von einer darunterliegenden Elementkammer 65 trennt. Als Ausströmbereich bei sich öffnendem Bypassventil 51 kann die Gehäusewand im Bereich der Bypasskammer 63 mit einer Lochung 67 versehen sein, die eine Art Schutzsieb für einen Bypassstrom bildet.

Beiden Ausführungsbeispielen gemeinsam ist eine zwischen Festlegeelement 35 und zugeordneter Endkappe 27 wirkende Mitnehmereinrichtung, die einen leichten und sicheren Auswechselvorgang verbrauchter Filterelemente 19, 21 ermöglicht. Die Mitnehmereinrichtung weist an mehreren um den Umfang des Filterelementes 19, 21 verteilten Stellen jeweils ein Zugglied in Form einer langgestreckten Leiste 71 auf, die, wie in Fig. 3 mit 69 bezeichnete ist, an der Unterseite der Scheibe 57 des Festlegeelementes 35 verankert ist. Die jeweilige Leiste 71 ist in einer jeweils zugehörigen Lasche 73, die am Außenumfang der Endkappe 27 angebracht ist, verschiebbar. Am freien Ende der Leiste 71 befindet sich ein Vorsprung 75 (siehe Fig. 1 und 2). Wenn für den Austausch eines Filterelementes 19, 21 der Deckel 9 abgenommen und über den Träger 37 das Festlegeelement 35 durch Bewegen des Deckels 9 aus dem Gehäuse 7 herausgenommen wird, bewegt sich das Festlegeelement 35 zunächst vom Filterelement 19, 21 weg, wobei die Leiste 71 in der Lasche 73 gleitet. Nach einer entsprechenden Weglänge des Trennvorganges, dieser Zustand ist in Fig. 4 dargestellt, läuft der Vorsprung 75 der Leiste 71 an der jeweiligen Lasche 73 an, die für den Vorsprung 75 einen Anschlag bildet, wodurch die Mitnehmereinrichtung aktiviert wird, so dass bei weiterer Bewegung die Endkappe 27 und damit das Filterelement 19, 21 mit bewegt wird und somit aus dem Tank aushebbar ist. Die Leisten 71 bilden daher sozusagen eine Handhabe für die bequeme Durchführung von Austauschvorgängen.

## Patentansprüche

1. Filtervorrichtung, mit mindestens einem in einem Gehäuse (7) austauschbar aufnehmbaren Filterelement (19, 21), das ein vom zu reinigenden Fluid durchströmbares Filtermedium (25) und an zumindest einem Ende eine Endkappe (27) aufweist, die zur Positionierung des Filterelements (19, 21) in einer Funktionsstellung mit einem Festlegeelement (35) zusammenwirkt, das mit einem abnehmbaren Deckel (9) des Gehäuses (7) verbunden und für den Austausch eines Filterelements (19, 21) aus dem Gehäuse (7) herausbewegbar ist, **dadurch gekennzeichnet, dass** das Festlegeelement (35) durch Abnehmen des Deckels (9) von der zugeordneten Endkappe (27) des Filterelements (19, 21) trennbar ist und dass zwischen Festlegeelement (35) und zugeordneter Endkappe (27) eine Mitnehmereinrichtung (71, 73) vorgesehen ist, die beim Trennvorgang in Abhängigkeit vom Erreichen einer vorgegebenen Weglänge der Relativbewegung zwischen Festlegeelement (35) und Endkappe (27) für eine Mitnahme der Endkappe (27) und damit des Filterelements (19, 21) aktivierbar ist.

2. Filtervorrichtung nach Anspruch 1, **dadurch gekennzeichnet, dass** die Mitnehmereinrichtung (71, 73) mindestens ein am Festlegeelement (35) verankertes Zugglied (71) aufweist, an dem sich in einem der vorgegebenen Weglänge der Relativbewegung entsprechenden Abstand vom Festlegeelement (35) ein Mitnehmer (75) befindet, der bei Erreichen dieser Weglänge an einem zugeordneten Anschlag (73) an der Endkappe (27) für die Mitnahme des Filterelements (19, 21) anläuft.

3. Filtervorrichtung nach Anspruch 1 oder 2, **dadurch gekennzeichnet, dass** das jeweilige Zugglied in Form einer Leiste (71) ausgebildet ist, die im Bereich ihres freien Endes einen Vorsprung (75) als Mitnehmer aufweist und in einer am Umfang der Endkappe (27) angebrachten Lasche (73) verschiebbar ist, die einen mit dem Vorsprung (75) zusammenwirkenden, die Verschiebebewegung begrenzenden Anschlag aufweist.

4. Filtervorrichtung nach einem der vorstehenden Ansprüche, **dadurch gekennzeichnet, dass** das Festlegeelement (35) als integrales Bestandteil ein Bypassventil (51) zur Bildung eines das Filtermedium (25) umgehenden Fluidweges aufweist.

5. Filtervorrichtung nach einem der vorstehenden Ansprüche, **dadurch gekennzeichnet, dass** das Festlegeelement (35) in einem axialen Abstand vom Deckel (9) mit diesem über einen zum kreiszylinderförmigen Gehäuse (7) koaxial verlaufenden Träger (37) verbunden ist und eine mit ihrem Außenumfang (59) an der Innenwand (61) des Gehäuses (7) anliegende Scheibe (57) aufweist, die sich an einer zur Achse des Trägers (37) senkrechten Radialebene erstreckt und das Gehäuse (7) in eine zwischen Festlegeelement (35) und Deckel (9) befindliche, obere Bypasskammer (63) und eine darunter befindliche Elementkammer (65) unterteilt.

6. Filtervorrichtung nach einem der vorstehenden Ansprüche, **dadurch gekennzeichnet, dass** das Festlegeelement (35) an der Unterseite der Scheibe (57) einen axial vorspringenden Stutzen (45) bildet, der sich bei der Funktionsstellung in eine zentrale Öffnung (29) der Endkappe (27) des Filterelements (19, 21) erstreckt und außenseitig an der Öffnung (29) durch eine Dichteinrichtung (31) abgedichtet ist, die innerhalb des Filtergehäuses (7) die Abdichtung der Rohseite gegenüber der Reinseite bildet.

7. Filtervorrichtung nach einem der vorstehenden Ansprüche, **dadurch gekennzeichnet, dass** radial außerhalb des Stutzens (45) ein von der Unterseite des Festlegeelements (35) glockenförmig vorspringender Abstützkörper (49) vorgesehen ist, der bei der Funktionsstellung an der Oberseite der Endkappe (27) zur Bildung einer axialen Sicherung derselben anliegt.

8. Filtervorrichtung nach einem der vorstehenden Ansprüche, **dadurch gekennzeichnet, dass** an der Oberseite der Scheibe (45) ein Vorsprung in der Art eines Doms (43) angeformt ist, dessen oberes Ende an dem das Festlegeelement (35) mit dem Deckel (9) verbindenden Träger (37) angreift und dass an der Außenseite des Doms (43) das Bypassventil (51) mit einem Ventilkörper (52) angeordnet ist, der unter Einwirkung einer Schließkraft (53) einen Durchlass (55) verschließt, der in der Scheibe (57) innerhalb des Bereichs des Stutzens (45) ausgebildet ist.

9. Filtervorrichtung nach einem der vorstehenden Ansprüche, **dadurch gekennzeichnet, dass** die Wand (61) des Gehäuses (7) im Bereich der Bypasskammer (63) eine Lochung (67) als Bypasssieb und im Bereich der Elementkammer (66) fensterartige Durchgänge (17) besitzt.

10. Filterelement zur Benutzung bei einer Filtervorrichtung nach einem der Ansprüche 1 bis 9, mit mindestens einer Endkappe (27), die zur Positionierung in einer Funktionsstellung mit einem Festlegeelement (35) eines zugeordneten Gehäuses (7) zusammenwirkt, **dadurch gekennzeichnet, dass** an der Endkappe (27) zumindest ein Anschlag in Form einer Lasche (73) ausgebildet ist, der als Bestandteil einer zwischen Festlegeelement (35) und Endkappe (27) wirksamen Mitnehmereinrichtung (71, 73) mit einem jeweiligen Zugglied in Form einer Leiste (71) des Festlegeelements (35) derart zusammenwirkt, dass das Festlegeelement (35) von der Endkappe (27) trennbar, jedoch bei Erreichen einer vorgegebenen Weglänge der Trennbewegung vom Festlegeelement (35) mitnehmbar ist, wobei ein Vorsprung (75) der Leiste (71) an der jeweiligen Lasche (73) anläuft, die für den Vorsprung (75) einen Anschlag bildet, wodurch die Mitnehmereinrichtung aktiviert wird, so dass bei weiterer Bewegung die Endkappe (27) und damit das Filterelement (19, 21) mitbewegt wird und somit aus dem Gehäuse (7) aushebbar ist.

## Claims

1. A filter device, comprising at least one filter element (19, 21) that can be accommodated interchangeably in a housing (7) and that has a filter medium (25) through which fluid to be cleaned can flow and an end cap (27) on at least one end, which end cap co-operates with a fixing element (35) in order to position the filter element (19, 21) in a functional position, which fixing element is connected to a removable cover (9) of the housing (7) and can be moved out of the housing (7) in order to change a filter element (19, 21), **characterised in that** the fixing element (35) can be separated from the assigned end cap (27) of the filter element (19, 21) by removing the cover (9), and that there is provided between the fixing element (35) and the assigned end cap (27) an entraining device (71, 73) which, during the separating process, can be activated dependently upon achieving a pre-determined path length of the relative movement between the fixing element (35) and the end cap (27) for entrainment of the end cap (27) and so of the filter element (19, 21).

2. The filter device according to Claim 1, **characterised in that** the entraining device (71, 73) has at least one tension member (71) anchored on the fixing element (35) on which is located an entrainer (75) a distance away from the fixing element (35) which corresponds to the pre-determined path length of the relative movement, which entrainer runs into an assigned stop (73) on the end cap (27) for entrainment of the filter element (19, 21) upon achieving this path length.

3. The filter device according to Claim 1 or 2, **characterised in that** the respective tension member is made in the form of a strip (71) which has in the region of its free end a projection (75) as an entrainer and can be displaced within a link (73) attached to the circumference of the end cap (27) and which has a stop co-operating with the projection (75) and delimiting the displacement movement.

4. The filter device according to any of the preceding claims, **characterised in that** the fixing element (35) has as an integral component a bypass valve (51) in order to form a fluid path passing round the filter medium (25).

5. The filter device according to any of the preceding claims, **characterised in that** the fixing element (35) is connected to the cover (9), an axial distance away from the latter, by means of a carrier (37) running coaxially to the circular cylindrical housing (7), and has a disc (57) resting with its outer circumference (59) against the inner wall (61) of the housing (7) and which extends on a radial plane perpendicular to the axis of the carrier (37) and sub-divides the housing (7) into an upper bypass chamber (63) located between the fixing element (35) and the cover (9) and an element chamber (65) located beneath.

6. The filter device according to any of the preceding claims, **characterised in that** the fixing element (35) forms an axially projecting connecting piece (45) on the lower side of the disc (57), which connecting piece extends into a central opening (29) of the end cap (27) of the filter element (19, 21) in the functional position and is sealed on the outside at the opening (29) by a sealing device (31) which forms the seal between the dirty side and the clean side within the filter housing (7).

7. The filter device according to any of the preceding claims, **characterised in that** a supporting body (49) projecting from the lower side of the fixing element (35) in the shape of a bell is provided radially outside of the connecting piece (45), which supporting body rests against the upper side of the end cap (27) so as to form an axial lock in the functional position.

8. The filter device according to any of the preceding claims, **characterised in that** a projection in the manner of a dome (43) is moulded onto the upper side of the disc (45), the upper end of which dome engages on the carrier (37) connecting the fixing element (35) to the cover (9), and that the bypass valve (51) is disposed with a valve body (52) on the outside of the dome (43), which valve body closes a passage (55) by the effect of a closing force (53), which passage is formed in the disc (57) within the region of the connecting piece (45).

9. The filter device according to any of the preceding claims, **characterised in that** the wall (61) of the housing (7) has a perforation (67) as a bypass filter in the region of the bypass chamber (63) and window-like passageways (17) in the region of the element chamber (66).

10. A filter element for use in a filter device according to any of Claims 1 to 9, comprising at least one end cap (27) which co-operates with a fixing element (35) of an assigned housing (7) in order to position in a functional position, **characterised in that** at least one stop in the form of a link (73) is formed on the end cap (27), which stop, as a component of an entraining device (71, 73) acting between the fixing element (35) and the end cap (27), co-operates with a respective tension member in the form of a strip (71) of the fixing element (35) such that the fixing element (35) can be separated from the end cap (27), but upon achieving a pre-determined path length of the separating movement can be entrained by the fixing element (35), a projection (75) of the strip (71) running into to the respective link (73) which forms a stop for the projection (75), by means of which the entraining device is activated so that with further movement the end cap (27), and so the filter element (19, 21), is also moved and so can be lifted out of the housing (7).

## Revendications

1. Dispositif de filtration, comprenant au moins un élément (19, 21) filtrant, qui peut être reçu, d'une manière remplaçable, dans une enveloppe (7) et qui a un milieu (25) filtrant pouvant être traversé par le fluide à épurer, et une coiffe (27) d'extrémité à au moins une extrémité, qui, pour mettre l'élément (19, 21) filtrant dans une position fonctionnelle, coopère avec un élément (35) de fixation, lequel est relié à un couvercle (9) pouvant être enlevé de l'enveloppe (7) et, pour le remplacement d'un élément (19, 21) filtrant, peut être retiré de l'enveloppe (7), **caractérisé en ce que** l'élément (35) de fixation peut, pour l'enlèvement du couvercle (9), être séparé de la coiffe (27) d'extrémité associée de l'élément (19, 21) filtrant et **en ce qu'**il est prévu, entre l'élément (35) de fixation et la coiffe (27)d'extrémité associée, un dispositif (71, 73) d'entraînement, qui, lors de l'opération de séparation, peut, en fonction du fait qu'une longueur de trajet donnée à l'avance du mouvement relatif entre l'élément (35) de fixation et la coiffe (27) d'extrémité est atteinte, être activé pour un entraînement de la coiffe (27) d'extrémité et ainsi de l'élément (19, 21) filtrant.

2. Dispositif de filtration suivant la revendication 1, **caractérisé en ce que** le dispositif (71, 73) d'entraînement a au moins un organe (71) de traction, qui est arrimé à l'élément (35) de fixation et sur lequel se trouve, à une distance de l'élément (35) de fixation correspondant à la longueur de trajet donnée à l'avance du mouvement relatif, un entraîneur (75), qui, lorsque cette longueur de trajet est atteinte, vient, pour l'entraînement de l'élément (19, 21) filtrant, sur une butée (73) associée de la coiffe (27) d'extrémité.

3. Dispositif de filtration suivant la revendication 1 ou 2, **caractérisé en ce que** l'organe de traction respectif est constitué sous la forme d'une baguette (71), qui a, dans la région de son extrémité libre, une saillie (75) comme entraîneur et qui peut coulisser dans un collier (73), qui est mis sur le pourtour de la coiffe (27) d'extrémité et qui a une butée coopérant avec la saillie (75) et limitant le mouvement de coulissement.

4. Dispositif de filtration suivant l'une des revendications précédentes, **caractérisé en ce que** l'élément (35) de fixation a, comme partie intégrante, une vanne (51) de dérivation pour former un trajet de fluide contournant le milieu (25) filtrant.

5. Dispositif de filtration suivant l'une des revendications précédentes, **caractérisé en ce que** l'élément (35) de fixation est relié à une distance axiale du couvercle (19) à celui-ci par un pilier (37) s'étendant coaxialement à l'enveloppe (7) en forme de cylindre de section transversale circulaire et a un disque (57), qui s'applique par son pourtour (59) extérieur à la paroi (61) intérieur de l'enveloppe (7), qui s'étend dans un plan radial perpendiculaire à l'axe du pilier (37) et qui subdivise l'enveloppe (7) en une chambre (63) supérieure de dérivation se trouvant entre l'élément (35) de fixation et le couvercle (9) et en une chambre (65) d'élément se trouvant en dessous.

6. Dispositif de filtration suivant l'une des revendications précédentes, **caractérisé en ce que** l'élément (35) de fixation forme, sur la face inférieure du disque (57) un appui (45) en saillie axialement, qui, en la position de fonctionnement, s'étend dans une ouverture (29) centrale de la coiffe (27) d'extrémité de l'élément (19, 21) filtrant et est rendu étanche, du côté extérieur sur l'ouverture (29), par un dispositif (31) d'étanchéité, qui forme, à l'intérieur de l'enveloppe (7) du filtre, l'étanchéité du côté brut par rapport au côté épuré.

7. Dispositif de filtration suivant l'une des revendications précédentes, **caractérisé en ce qu'**il est prévu, à l'extérieur radialement de l'appui (45), une pièce (49) d'appui, qui fait saillie en forme de cloche du côté inférieur de l'élément (35) de fixation et qui, en la position de fonctionnement, s'applique au côté supérieur de la coiffe (27) d'extrémité avec formation d'un assujettissement axial.

8. Dispositif de filtration suivant l'une des revendications précédentes, **caractérisé en ce qu'**il est formé, sur le côté supérieur du disque (45), une saillie à la manière d'un dôme (43), dont l'extrémité supérieure attaque le pilier (37) reliant l'élément (35) de fixation au couvercle (9) et **en ce qu'**il est monté, sur le côté extérieur du dôme (43), la vanne (51) de dérivation ayant un obturateur (52), qui, sous l'effet d'une force (53) de fermeture, ferme un passage (55) constitué dans le disque (57) au sein de la région de l'appui (45).

9. Dispositif de filtration suivant l'une des revendications précédentes, **caractérisé en ce que** la paroi (61) de l'enveloppe (7) a, dans la région de la chambre (63) de dérivation, des trous (67) comme tamis de dérivation et, dans la région de la chambre (66) d'élément, des passages (17) de type à hublot.

10. Elément filtrant à utiliser dans une installation de filtration suivant l'une des revendications 1 à 9, comprenant au moins une coiffe (27) d'extrémité, qui, pour la mise dans une position fonctionnelle, coopère avec un élément (35) de fixation d'une enveloppe (7) associée, **caractérisé en ce qu'**il est formé, sur la coiffe (27) d'extrémité, au moins une butée sous la forme d'un collier (73), qui, sous la forme d'un élément constitutif d'un dispositif (71, 73) d'entraîneur efficace entre l'élément (35) de fixation et la coiffe (27) d'extrémité, coopère avec un organe respectif de traction sous la forme d'une baguette (71) de l'élément (35) de fixation, de manière à ce que l'élément (35) de fixation puisse être séparé de la coiffe (27) d'extrémité, en pouvant toutefois être entraîné, lorsque est atteinte une longueur de trajet pouvant être donnée à l'avance du mouvement de séparation de l'élément (35) de fixation, une saillie (75) de la barrette (71) arrivant sur le collier (73) respectif, qui forme une butée pour la saillie (75), grâce à quoi le dispositif d'entraînement est activé de manière, lorsque le mouvement se continue, à ce que la coiffe (27) d'extrémité et ainsi l'élément (19, 21) filtrant soit entraînée et puisse être soulevée ainsi de l'enveloppe (7).
